# EUROPEAN PATENT SPECIFICATION

(11) **EP 3 166 849 B1**
(45) Date of publication and mention of the grant of the patent: **04.04.2018**
(21) Application number: 15763653.1
(22) Date of filing: 07.07.2015
(51) Int. Cl.: B64G 1/66, B64G 3/00, B64G 4/00, G01M 1/12, B64G 1/24, B64G 1/64

(54) **SYSTEM FOR LOCATING THE BARYCENTER OF AT LEAST ONE OBJECT ORBITING IN SPACE AND RELATED PROCESS OF PHYSICAL AND MECHANICAL CHARACTERIZATION OF THE IDENTIFIED OBJECT**
SYSTEM ZUM LOKALISIEREN DES SCHWERPUNKTS MINDESTENS EINES IM RAUM KREISENDEN OBJEKTS UND VERFAHREN ZU PHYSIKALISCHEN UND MECHANISCHEN CHARAKTERISIERUNG DES IDENTIFIZIERTEN OBJEKTS
SYSTÈME PERMETTANT DE LOCALISER LE BARYCENTRE D'AU MOINS UN OBJET EN ORBITE DANS L'ESPACE ET PROCÉDÉ ASSOCIÉ PERMETTANT UNE CARACTÉRISATION PHYSIQUE ET MÉCANIQUE DE L'OBJET IDENTIFIÉ

(30) Priority: 09.07.2014 IT TO20140550
(43) Date of publication of application: 17.05.2017
(73) Proprietor: Politecnico di Torino, 10129 Torino (IT)
(72) Inventor: PASTORELLI, Stefano, I-10129 Torino (IT); MAURO, Stefano, I-10129 Torino (IT); MOHTAR EIZAGA THAREK, Manuel, I-10129 Torino (IT); BIONDI, Gabriele, I-10129 Torino (IT); SORLI, Massimo, I-10129 Torino (IT)
(74) Representative: Garavelli, Paolo
(86) International application number: PCT/IT2015/000177
(87) International publication number: WO 2016/006011

(56) References cited:
- CN-A- 101 435 732
- ZHOU JUN ET AL: "Spacecraft center of mass online estimation based on multi-accelerometers", INFORMATION MANAGEMENT AND ENGINEERING (ICIME), 2010 THE 2ND IEEE INTERNATIONAL CONFERENCE ON, IEEE, PISCATAWAY, NJ, USA, 16 April 2010 (2010-04-16), pages 295-298, XP031684882, ISBN: 978-1-4244-5263-7
- WILSON E ET AL: "On-line, gyro-based, mass-property identification for thruster-controlled spacecraft using recursive least squares", THE 2002 45TH. MIDWEST SYMPOSIUM ON CIRCUITS AND SYSTEMS. CONFERENCE PROCEEDINGS. TULSA, OK, AUG. 4 - 7, 2002; [MIDWEST SYMPOSIUM ON CIRCUITS AND SYSTEMS], NEW YORK, NY : IEEE, US, vol. 2, 4 August 2002 (2002-08-04), pages 334-337, XP010635393, ISBN: 978-0-7803-7523-9

## Description

The present invention refers to a system for locating the barycenter of at least one object orbiting in space and to a related process of physical and mechanical characterization of the identified object.

It is known that operations like recovery, capture or deviation of the orbit of unknown and non-collaborative space objects are affected by inertial and gyroscopic effects which depend on quantities like: mass, inertial tensor, barycenter position, orientation of main inertial axes.

These quantities, in general, cannot be directly measured. A possible way for measuring them provides for observing the object to be identified by means of remote sensors, typically videocameras, which can be placed on board the observing satellite.

Known image analysis techniques allow observing particular points of the object to be identified, and measuring the followed trajectories by defining them in a reference system integral with an observer or with respect to any other reference system.

EP2340998 discloses a control system of an aerospace vehicle based on an on-line estimation of inertia. The system comprises a processor on board the aerospace vehicle adapted to on-line estimate the inertia of the aerospace vehicle and to determine the angular position and the angular speed of the aerospace vehicle. Through the measure of the attitude of the aerospace vehicle and the on-line estimation of inertia, it is possible to check movement and orientation of the aerospace vehicle. In particular, the processor allows generating a matrix of inertia with respect to a center of mass of the aerospace vehicle by using an estimation of the angular speed and an estimated measure of the moment of an actuator placed on board the aerospace vehicle.

EP2340998 however does not solve the problem of determining the barycenter of a satellite or body lacking the necessary means for generating the matrix of inertia.

The problem is particularly felt in the aerospace sector for capturing and removing orbiting debris by means of systems for recognizing, capturing and removing orbiting objects which populate the space surrounding the Earth, and which can be configured as potential sources of risks for present and future aerospace activities.

From 4 October 1957, day in which the first Sputnik artificial satellite was launched by the Soviet Union, more than 4800 launches have been performed, which have orbited about 15000 satellites, of which, so far, only 800 are still operating. This means that a great number of objects which have concluded their missions are still orbiting around the Earth. This set of objects built by men is identified as "Space Debris".

Apart from the objects orbiting at the highest heights of terrestrial atmosphere, all other debris are aimed to re-enter the Earth due to the natural decay process effect.

As an average, every day, an object catalogued as bigger than 10 cm of diameter falls onto the Earth. The risk of re-enter is given not only by the mechanical impact, but also by the chemical or radiological environmental contamination. Moreover, space debris can compromise the operation of active satellites, by damaging these latter ones due to collision or reducing their performance by depositing onto the surfaces of optical systems, degrading solar panels and antennas, thereby reducing their transmission capacity and generating interferences with the signals.

Therefore, there is the need of developing the necessary technology for capturing and removing big-sized space debris.

The problem of identifying the barycenter of an orbiting object occurs also in relation to the prevention of risks linked to the so-called NEOs (Near Earth Objects).

CN-A-101 435 732 discloses a system for the detection of the center of gravity according to the preamble of Claim 1.

Object of the present invention is providing a system capable of identifying the barycenter of an orbiting body or anyway a moving body in space.

A further object is providing a process adapted to allow identifying the barycenter.

The above and other objects and advantages of the invention, as will appear from the following description, are obtained with a system for locating the barycenter of at least one object orbiting in space, as claimed in claim 1.

Moreover, the above and other objects and advantages of the invention are obtained with a process of physical and mechanical characterization of the identified object, as claimed in claim 5.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:
- Figure 1 shows a schematic view of a first embodiment of the system for locating the barycenter of at least one object orbiting in space according to the present invention;
- Figure 2 shows a schematic view of a second embodiment of the system for locating the barycenter of at least one object orbiting in space according to the present invention;
- Figure 3 shows a schematic view of the position of the identified object at two following instants through the system for locating the barycenter of at least one object orbiting in space according to the present invention;
- Figure 4 shows a graph for defining the position of the barycenter of the identified object according to the present invention;
- Figure 5 shows a flow diagram of the steps of an embodiment of the process of physical and mechanical characterization of the identified object through the system for locating the barycenter of at least one object orbiting in space according to the present invention;
- Figure 6 shows a flow diagram, associated with the diagram of Figure 5, of the sequential steps of the process for locating the instantaneous rotation axes of the identified object; and
- Figure 7 shows a flow diagram of the sequential steps of the process for searching the best estimation of the barycenter position associated with the diagram of Figure 5.

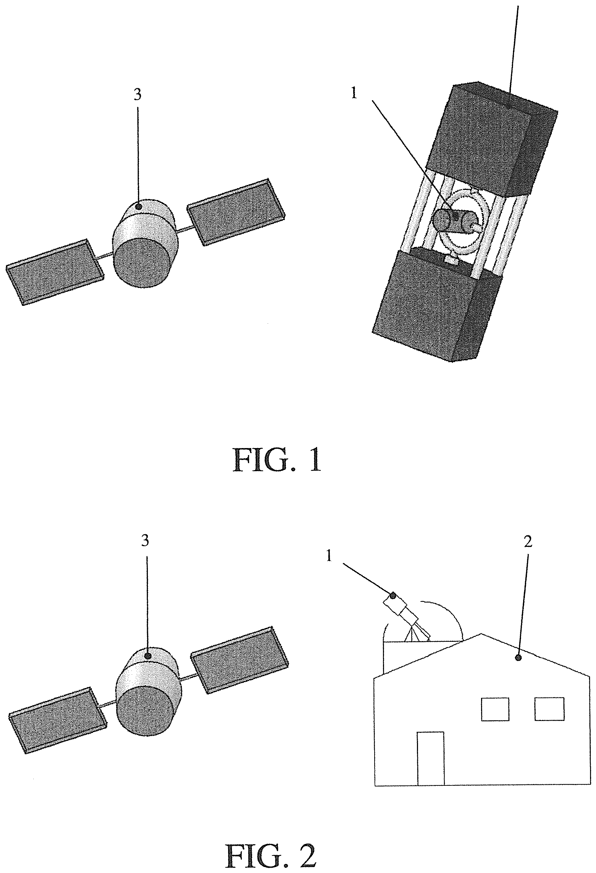

With reference to Figures 1 and 2, it is possible to note that a system for locating the barycenter of at least one object orbiting in space, such as for example space debris, adapted to allow a physical and mechanical characterization of the identified object comprises:
- at least one remote sensor 1 placed on board a station 2 adapted to detect the space coordinates assumed in time by certain points Pi of the identified object 3, with respect to at least one space reference system;
- first means adapted to acquire data related to the positions assumed in time by the certain points Pi to reconstruct the trajectory followed by the certain points Pi;
- second means adapted to determine the instantaneous rotation axes of the identified object associated with the trajectory, determine a segment perpendicular to each pair of instantaneous rotation axes in a sequence and locate the mean point of the segment.

The system for locating the barycenter of at least one object orbiting in space, moreover, comprises third means adapted to compute a discrete function d(tk) of the length of the segments, compute an envelope curve c of the local maxima of the function d(tk) and determine the minimum of the envelope curve c for locating the barycenter G(tk) of the identified object.

The remote sensor 1 can be an optical system or the like.

The station 2 can be a space craft adapted to follow the identified object. Alternatively, the station 2 can be an earth base.

A process of physical and mechanical characterization of the orbiting object identified through the system is based on the consideration that typical motions of an orbiting body can be decomposed into barycenter motion along the orbit and into body rotation motions around the barycenter. Assuming that the body does not exchange with the outside other forces in addition to the mass ones, it is not possible that rotary motions occur around axes which do not pass by the barycenter.

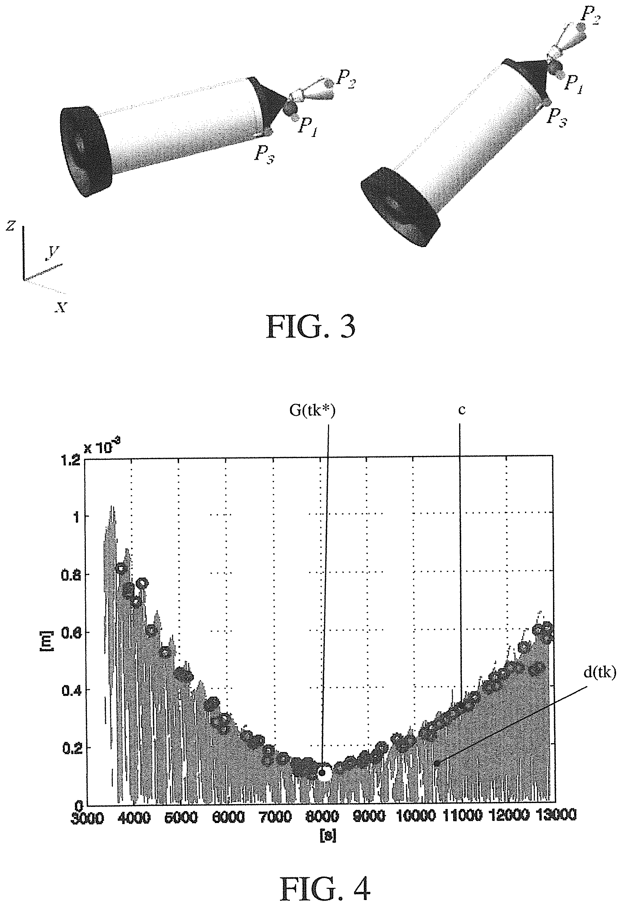

With reference to Figure 3, starting data are composed of the trajectories of n points, for example P1, P2 and P3, of one of the orbiting objects measured by means of the system.

For each one of the observed points P1, P2 and P3, the coordinates must be available in a suitable reference system at following instants tk and the sampling frequency must be high enough.

Data are considered which are related to two following sampling intervals, [tk-1, tk] and [tk, tk+1]. In each interval, the motion can be described as rotary-translating, and its axis of instantaneous rotation is certain by using, for example, the process discovered by Ebherarter-Ravani which is known in the art.

By analyzing the two following intervals [tk-1, tk] and [tk, tk+1], two instantaneous rotation axes are obtained.

If the two instantaneous rotation axes are coplanar and not parallel, it is possible to locate the intersection point. It is moreover possible to state that the body motion is a pure rotation and that the body barycenter coincides with the located intersection point; it is not necessary, in this case, to perform other operations.

If, instead, the two axes are skewed, the body has a generic rotary-translating motion. Moreover, there is no intersection between these axes, but it is anyway possible to locate the segment which is perpendicular to both, whose length is the distance between the axes.

Taking into account a high enough sampling frequency, the distance is small and the position of the mean point of the segment perpendicular to both axes is an estimation of the position of the body barycenter G(tk) at instant tk.

With reference to Figure 4, the estimation of the position of the barycenter G(tk) is performed at all acquired useful sampling instants. The estimation requires to obtain the discrete function d(tk) of the distances between the rotation axes evaluated at following instants.

The discrete function d(tk) has several local maxima and the corresponding minima are next to zero.

In order to define the barycenter position, the envelope curve c is constructed for the local maxima, and its minimum point is located. The estimation computed next to the local minimum is assumed as best estimation of the barycenter position.

Figure 4 also shows further points in which it is possible to satisfactorily accurately locate the barycenter position.

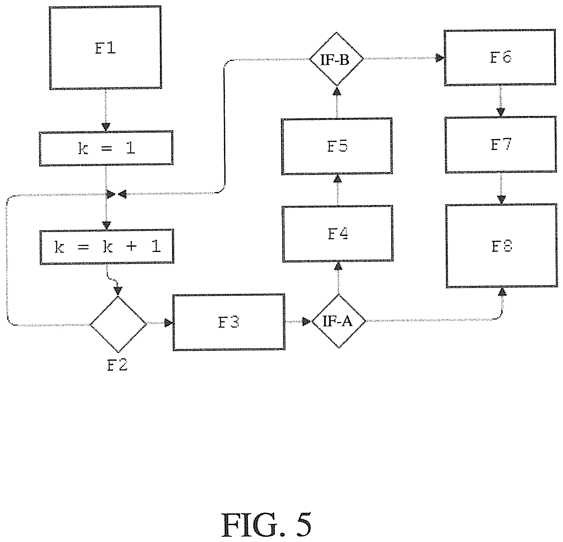

With reference to Figure 5, it is possible to note that the process according to the present invention, for the physical and mechanical characterization of at least one orbiting object identified through a system as described above, comprises the following steps:
- F1) acquiring, at a suitable sampling frequency, data related to space coordinates of the positions assumed in time by certain points Pi of the identified object through the sensor 1 of the system according to the present invention;
- F2) verifying the availability of trajectory data of at least three of the points Pi at three following instants tk-1, tk, tk+1 and, if available, reconstructing the trajectory followed by at least three Pi. Should this condition not be verified, wait for new trajectory data of three points Pi at following instants tk, tk+1, tk+2;
- F3) locating the instantaneous rotation axes, typically two, associated with the trajectory of the at least three points Pi through the second means of the system according to the present invention;

- IF-A) verifying the co-planarity condition of axes located in step F3 through the second means of the system according to the present invention. If a co-planarity is found, proceed to step F8), otherwise to step F4);
- F4) locating the segment perpendicular to each pair of instantaneous rotation axes in a sequence and computing its length d(tk) through the second means of the system according to the present invention;
- F5) determining the mean point G(tk) of the segment located through the second means of the system according to the present invention;
- IF B) verifying whether conditions occur for proceeding with the process;
- F6) constructing the envelope curve c of local maxima of the discrete function d(tk) through the third means of the system according to the present invention;
- F7) searching for the minimum of the envelope curve c and locating the instant tk* in which the minimum occurs, and locating the best estimation of the object barycenter as value of the discrete function G(tk) obtained in step F5) at instant tk*, for example through the third means of the system according to the present invention;
- F8) setting the position of the barycenter G(tk*) available, for example through the third means of the system according to the present invention.

The barycenter position, therefore, is expressed in three reference systems: inertial, integral with the observer, integral with the body.

The sequence of positions assumed by the barycenter, when can be measured with a satisfactory accuracy, is part of the orbit on which the observed body moves. These data then allow, with known processes, computing the actual orbit on which the observed body moves.

It is advisable to state that, in the trajectory of each monitored point, there are instants in which the coordinates of the i-th point cannot be measured, because the point itself is hidden to the observer.

The algorithm can be applied at a given instant tk when the coordinates of at least three different points Pi are available, at instant tk, at previous instant tk-1 and at following instant tk+1. If this condition is not verified, the chance can be verified of applying it at the immediately following instant tk+1, thereby verifying the availability of data at instants tk, tk+1, tk+2. This iteration will have to be repeated till three instants in which required data are available can be identified.

A first sequence of steps is described, belonging to the process dealing with the location of instantaneous rotation axes associated with the trajectory of the at least three points Pi. Starting data are composed of the coordinates of at least three points P1, P2 and P3 at two generic following time instants tk and tk+1.

Assuming that the instants are near enough to be able to approximate the rotary-translating motion with a rotary motion characterized by an instantaneous rotation axis, the algorithm determines the axis.

Firstly, vectors are built which describe the displacement of each point Pi in the time interval tk, tk+1. The knowledge of vectors designated as gi allows locating a plane ε perpendicular to the body rotation axis.

The projections ri are built for two of the three vectors gi on plane ε, and their mean points are located.

Then, perpendicular lines are traced to vectors ri passing by their mean points, and their intersection point Q is located. The point is the trace of the rotation axis on plane ε.

The rotation axis is then determined depending on the knowledge of a plane perpendicular thereto and of the intersection point Q with this plane.

Assuming that data related to the coordinates of points Pi are affected by noise, it is possible to determine the searched plane ε by means of a minimum square estimation of results which can be obtained, taking into account a number of points which exceeds three.

The search for point Q, trace of the rotation axis on plane ε, is performed by projecting on plane ε all available vectors, locating for each pair of projections rm, rn the related intersection point Qm,n of the perpendicular lines passing by the mean points, and finally computing the geometric barycenter of the set of located points.

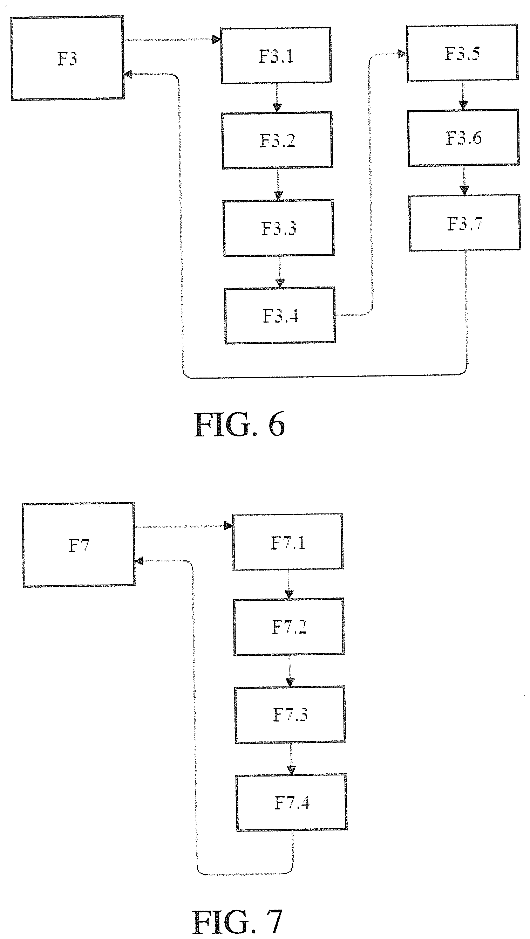

With reference to Figure 6, it is possible to note that step F3) is performed for example through an Eberarther-Ravani algorithm comprising the sub-steps of:
- F3.1) computing the vectors gi adapted to connect homologous points Pi(tk) and Pi(tk+1);
- F3.2) computing the plane ε perpendicular to the body rotation axis starting from vectors gi;
- F3.3) projecting each pair of points Pi(tk) and Pi(tk+1) on piano ε;
- F3.4) constructing the axes of the segments connecting homologous points Pi(tk) and Pi(tk+1) projected on plane ε;
- F3.5) intersecting all possible pairs of axes of the segments;
- F3.6) estimating a point belonging the rotation axis by computing the geometric barycenter of all intersection points;
- F3.7) constructing the rotation axis starting from collected information.

It is wholly clear for a skilled person in the art that step F3) can be performed through any other algorithm suitable for the object of the present invention. A second sequence of steps belonging to the process dealing with the definition of the position of the barycenter is described. The envelope curve c is constructed for the local maxima of the discrete function d(tk) and its minimum point is located. The estimation computed next to the local minimum point tk* is assumed as best estimation of the barycenter G(tk*) position.

With reference to Figure 7, it is possible to note that step F7) dealing with the evaluation of the best estimation of the barycenter G(tk*) position comprises the sub-steps of:
- F7.1) locating the local maxima of said function d(tk);
- F7.2) evaluating the curve c, as envelope of local maxima;
- F7.3) evaluating the time instant tk* in which the curve c has an absolute minimum;
- F7.4) evaluating the function G(tk) in the found instant tk*.

## Claims

1. System for locating the barycenter of at least one identified object orbiting in space adapted to allow the physical and mechanical characterization of said identified object, comprising:
- at least one remote sensor (1) suitable for being placed on board of a station (2) adapted to detect the space coordinates of certain points (Pi) belonging to said identified object (3), with respect to at least one space reference system;
- first means for acquiring data related to positions assumed in time by said certain points (Pi) for reconstructing the trajectory followed by said certain points (Pi);
- second means for determining the instantaneous rotation axes of the at least one identified object (3) whose certain points (Pi) are associated with said trajectory,
**characterized in that**:
said second means is further adapted to determine a segment perpendicular to each pair of said instantaneous rotation axes in a sequence and to locate the median point of said segment; and the system further comprises third means for computing a discrete function d(tk) of the length of said segments, for computing an envelope curve (c) of the local maxima of said discrete function d(tk) and for determining the minimum of said envelope curve (c) for locating the barycenter G(tk*) of said identified object.

2. System according to the previous claim, **characterized in that** said remote sensor (1) is an optical system.

3. System according to claim 1, **characterized in that** said station (2) is a space craft adapted to follow said identified object.

4. System according to claim 1, **characterized in that** said station (2) is an earth base.

5. Process of physical and mechanical characterization of at least one object orbiting identified through a system according to any one of the previous claims, said process comprising the following steps:
- F1) acquiring, at a suitable sampling frequency, data related to the space coordinates of the positions assumed in time by certain points (Pi) of said identified object;
- F2) reconstructing the trajectory followed by at least three of said points (Pi);
- F3) locating the instantaneous rotation axes associated with said trajectory of said at least three points (Pi);
- IF-A) verifying the co-planarity condition of said axes located in step F3) and, in case a co-planarity is found, proceeding to step F8), otherwise proceeding to step F4);
**characterized in that** it further comprises the steps of:
- F4) locating the segment perpendicular to each pair of said instantaneous rotation axes in a sequence and computing its length d(tk);
- F5) determining the median point G(tk) of said segment;
- IF-B) verifying that there are conditions for proceeding with the process;
- F6) constructing the envelope curve (c) of the local maxima of said discrete function d(tk);
- F7) searching for the minimum of said envelope curve (c) and locating the instant (tk*) in which said minimum occurs and locating the best estimation of the barycenter of said identified object as value of said discrete function G(tk) obtained in step F5) at instant (tk*);
- F8) making available the coordinate of the position of said barycenter G(tk*).

6. Process according to the previous claim, **characterized in that** said step F3) is performed through an Eberarther-Ravani algorithm comprising the following sub-steps:
- F3.1) computing vectors (gi) adapted to connect homologous points Pi(tk) and Pi(tk+1);
- F3.2) computing the plane (ε) perpendicular to the body rotation axis starting from said vectors (gi);
- F3.3) projecting each pair of said points Pi(tk) and Pi(tk+1) on said plane (ε);
- F3.4) constructing the axes of the segments connecting said homologous points Pi(tk) and Pi(tk+1) projected on said plane (ε);
- F3.5) intersecting all possible pairs of said axes of said segments;
- F3.6) estimating a point belonging to the rotation axis by computing the geometric barycenter of all intersection points;
- F3.7) constructing the rotation axes starting from collected information.

7. Process according to claim 5, **characterized in that** said step F7) comprises the sub-steps of:
- F7.1) locating the local maxima of said function d(tk);
- F7.2) evaluating the curve (c), as envelope of said local maxima;
- F7.3) evaluating the time instant (tk*) in which said curve (c) has an absolute minimum;
- F7.4) evaluating the function G(tk) in the found instant (tk*).

## Patentansprüche

1. System für die Erkennung des Schwerpunktes von mindestens einem Objekt, das in der Umlaufbahn erkannt wird, welches dazu dient, die physikalische und mechanische Charakterisierung eines genannten erkannten Objekts zu ermöglichen, das Folgendes enthält:
- mindestens einen fernliegenden Sensor (1), der dazu dient, auf einer Station (2) angebracht zu werden, der dazu dient, die Raumkoordinaten bestimmter Punkte (Pi) im Verhältnis zu mindestens einem Raumbezugssystem zu erfassen, welche dem genannten erkannten Objekt (3) angehören;
- erste Mittel zur Erfassung der entsprechenden Positionen, die die genannten bestimmten Punkte (Pi) eingenommen haben, um die von den genannten bestimmten Punkten (Pi) verfolgte Trajektorie zu rekonstruieren;
- zweite Mittel zur Bestimmung der sofort rotierenden Achsen des mindestens einen erkannten Objekts, dessen bestimmte Punkte (Pi) der genannten Trajektorie zugeordnet werden,
und **dadurch gekennzeichnet ist, dass**:
die genannten Mittel außerdem dazu dienen, ein senkrechtes Segment jedes Paares der genannten sofort rotierenden Achsen nacheinander zu bestimmen und den Mittelpunkt des genannten Segments zu erkennen; und
- das System außerdem drei Mittel enthält, um eine diskrete Funktion d(tk) der Länge der genannten Segmente zu berechnen, um eine Hüllkurve (c) der maximalen lokalen Punkte der genannten diskreten Funktion d(tk) zu berechnen und um die minimalen Punkte der genannten Hüllkurve (c) zu bestimmen, um den Schwerpunkt G(tk*) des genannten erkannten Objekts zu erkennen.

2. System gemäß dem vorhergehenden Patentanspruch, das **dadurch gekennzeichnet ist, dass** der genannte fernliegende Sensor (1) ein Optiksystem ist.

3. System gemäß Patentanspruch 1, das **dadurch gekennzeichnet ist, dass** die genannte Station (2) ein Raumfahrzeug ist, das dazu dient, das genannte erkannte Objekt zu verfolgen.

4. System (1) gemäß Patentanspruch 1, das **dadurch gekennzeichnet ist, dass** die genannte Station (2) terrestrisch ist.

5. Verfahren zur physikalischen und mechanischen Charakterisierung von mindestens einem Objekt in der Umlaufbahn, das durch ein System gemäß einem der vorhergehenden Patentansprüche erkannt wird, das genannte Verfahren enthält die folgenden Phasen:
- F1) Erfassung der entsprechenden Daten der Raumkoordinaten der Positionen, die im Laufe der Zeit bestimmte Punkte (Pi) des genannten erkannten Objekts eingenommen haben, mit einer entsprechenden Bemusterungsfrequenz;
- F2) Rekonstruktion der von mindestens drei der genannten Punkte (Pi) verfolgten Trajektorie;
- F3) Erkennung der sofort rotierenden Achsen, die mit der genannten Trajektorie der genannten mindestens drei Punkte (Pi) verbunden sind;
- IF-A) Prüfung der Bedingung der Komplanarität der genannten Achsen, die in der Phase F3) erkannt werden, wenn die Komplanarität festgestellt wird, wird mit der Phase F8), anderenfalls mit der Phase F4) weitergemacht;
und **dadurch gekennzeichnet ist, dass** es außerdem folgende Phasen enthält:
- F4) Erkennung des senkrechten Segments jedes Paares der genannten sofort rotierenden Achsen nacheinander und Berechnung seiner Länge d(tk);
- F5) Bestimmung des Mittelpunktes G(tk) des genannten Segments;
- IF-B) Prüfung des Bestehens der Bedingungen für die Fortführung des Verfahrens;
- F6) Konstruktion der Hüllkurve (c) der maximalen lokalen Punkte der genannten diskreten Funktion d(tk);
- F7) Suche des minimalen Punktes der genannten Hüllkurve (c) und Erkennung des Moments (tk*), in dem der genannte minimale Punkt erscheint, und Erkennung der besten Schätzung des Schwerpunktes des genannten Objekts, der als Wert der genannten diskreten Funktion G(tk) erkannt wird, welche in der Phase F5) im Moment (tk*) erhalten wird;
- F8) Bereitstellung der Koordinaten der Position des genannten Schwerpunktes G(tk*).

6. Verfahren gemäß dem vorhergehenden Patentanspruch, das **dadurch gekennzeichnet ist, dass** die genannte Phase F3) durch einen Eberharter-Ravani-Algorithmus ausgeführt wird, der die folgenden Unterphasen enthält:
- F3.1) Berechnung der Vektoren (gi), die dazu dienen, die homologen Punkte Pi(tk) und Pi(tk+1) zu verbinden;
- F3.2) Berechnung der senkrechten Ebene (e) zur Rotationsachse des Körpers ausgehend von den genannten Vektoren (gi);
- F3.3) Projektion jedes Paares der genannten Punkte Pi(tk) und Pi(tk+1) auf die genannte Ebene (ε);
- F3.4) Konstruktion der Achsen der Segmente, die die genannten homologen Punkte Pi(tk) und Pi(tk+1) verbinden, die auf die genannte Ebene (ε) projiziert werden;
- F3.5) Schnittpunkt aller möglichen Paare der genannten Achsen der genannten Segmente;
- F3.6) Schätzung eines zur Rotationsachse gehörenden Punktes durch Berechnung des geometrischen Schwerpunktes aller Schnittpunkte;
- F3.7) Konstruktion der Rotationsachse ausgehend von den gesammelten Informationen.

7. Verfahren gemäß Patentanspruch 5, das **dadurch gekennzeichnet ist, dass** die genannte Phase F7) die folgenden Unterphasen enthält:
- F7.1) Erkennung der maximalen lokalen Punkte der genannten Funktion d(tk);
- F7.2) Bewertung der Kurve (c) als Hülle der genannten maximalen lokalen Punkte;
- F7.3) Bewertung des Moments (tk*), in dem die genannte Kurve (c) ihren absoluten minimalen Punkt hat;
- F7.4) Bewertung der Funktion G(tk) im gefundenen Moment (tk*).

## Revendications

1. Système pour déterminer le barycentre au moins d'un objet identifié en orbite dans l'espace apte à permettre la caractérisation physique et mécanique de l'objet identifié, comprenant :
- au moins un capteur distant (1) apte à être placé à bord d'une station (2) en mesure de relever les coordonnées spatiales de points déterminés (Pi) appartenant à l'objet identifié (3), par rapport à un système de référence spatial au moins ;
- des premiers moyens pour saisir les données relatives aux positions prises au cours du temps par les points déterminés (Pi) pour reconstruire la trajectoire suivie par ces points (Pi) ;
- des seconds moyens pour déterminer les axes de rotation instantanée au moins d'un objet identifié dont les points déterminés (Pi) sont associés à cette trajectoire ;
**caractérisé en ce que** :
les seconds moyens sont également aptes à déterminer un segment perpendiculaire à chaque couple d'axes de rotation instantanée dans l'ordre et à repérer le point moyen du segment ; et
- le système comprend aussi des troisièmes moyens pour calculer une fonction discrète d(tk) de la longueur des segments, afin de calculer une courbe enveloppe (c) des maxima locaux de la fonction discrète d(tk) et pour déterminer le minimum de la courbe enveloppe (c) afin de repérer le barycentre G(tk*) de l'objet identifié.

2. Système selon la revendication précédente, **caractérisé en ce que** le capteur distant (1) est un système optique.

3. Système, selon la revendication 1, **caractérisé en ce que** la station (2) est un véhicule spatial apte à poursuivre l'objet identifié.

4. Système, selon la revendication 1, **caractérisé en ce que** la station (2) est une base terrestre.

5. Procédure de caractérisation physique et mécanique au moins d'un objet en orbite identifié à travers un système selon l'une des revendications précédentes, la procédure comprend les phases suivantes :
- F1) saisie, à une fréquence d'échantillonnage adéquate, des données relatives aux coordonnées spatiales des positions prises au cours du temps par les points déterminés (Pi) de l'objet identifié ;
- F2) reconstruction de la trajectoire suivie par trois points (Pi) au moins ;
- F3) identification des axes de rotation instantanée associés à cette trajectoire de trois points (Pi) au moins ;
- IF-A) vérification de la condition de coplanarité des axes identifiés dans la phase F3) et, en cas de confirmation de la coplanarité, on passe à la phase F8), dans le cas contraire, on passe à la phase F4) ;
**caractérisée par** le fait de comprendre aussi les phases de :
- F4) identification du segment perpendiculaire à chaque couple d'axes de rotation instantanée dans l'ordre et calcul de sa longueur d(tk) ;
- F5) identification du point moyen G(tk) du segment ;
- IF-B) vérification de la présence des conditions pour continuer la procédure;
- F6) construction d'une courbe enveloppe (c) des maxima locaux de la fonction discrète d(tk) ;
- F7) recherche du minimum de la courbe enveloppe (c) et identification de l'instant (tk*) où le minimum se manifeste et identification de la meilleure estimation du barycentre de l'objet identifié comme valeur de la fonction discrète G(tk) obtenue dans la phase F5) à l'instant (tk*) ;
- F8) mise à disposition des coordonnées de la position du barycentre G(tk*).

6. Procédure selon la revendication précédente, **caractérisée en ce que** la phase F3) est réalisée à travers un algorithme de Eberarther-Ravani comprenant les sous-phases suivantes :
- F3.1) calcul de vecteurs (gi) aptes à relier les points homologues Pi(tk) et Pi(tk+1) ;
- F3.2) calcul du plan (ε) perpendiculaire à l'axe de rotation du corps à partir des vecteurs (gi) ;
- F3.3) projection de chaque couple de points Pi(tk) et Pi(tk+1) sur le plan (ε);
- F3.4) construction des axes des segments qui relient les points homologues Pi(tk) et Pi(tk+1) projetés sur le plan (ε) ;
- F3.5) intersection de tous les couples possibles des axes des segments ;
- F3.6) estimation d'un point appartenant à l'axe de rotation en calculant le barycentre géométrique de tous les points d'intersection ;
- F3.7) construction de l'axe de rotation à partir des informations collectées.

7. Procédure selon la revendication 5, **caractérisée en ce que** la phase F7) comprend les sous-phases de :
- F7.1) identification des maxima locaux de la fonction d(tk) ;
- F7.2) évaluation de la courbe (c), comme enveloppe des maxima locaux ;
- F7.3) évaluation de l'instant de temps (tk*) où la courbe (c) présente le minimum absolu ;
- F7.4) évaluation de la fonction G(tk) à l'instant (tk*) trouvé.
